# EUROPÄISCHE PATENTSCHRIFT

(11) **EP 2 228 189 B1**
(45) Veröffentlichungstag und Bekanntmachung des Hinweises auf die Patenterteilung: **14.11.2012**
(21) Anmeldenummer: 09003362.2
(22) Anmeldetag: 09.03.2009
(51) Int. Cl.: B29C 33/00, B29C 45/26, B29D 23/00

(54) **Verfahren zur Herstellung eines rohrförmigen Hohlkörpers sowie rohrförmiger Hohlkörper**
Method for producing a tubular hollow body and tubular hollow body
Procédé de fabrication d'un corps creux tubulaire et corps creux tubulaire

(43) Veröffentlichungstag der Anmeldung: 15.09.2010
(73) Patentinhaber: Georg Fischer JRG AG, 4450 Sissach (CH)
(72) Erfinder: Porfido, Erasmo, 8234 Stetten (CH); Heer, Peter, 79807 Lottstetten (DE); Breyer, Markus, 78315 Radolfzell (DE)
(74) Vertreter: De Colle, Piergiacomo

(56) Entgegenhaltungen:
- EP-A- 0 384 924
- DE-A1- 3 239 623
- FR-A- 2 079 486
- JP-A- 1 063 117
- JP-A- 1 067 316
- JP-A- 1 176 526
- JP-A- 8 142 114
- JP-A- 60 129 225
- JP-A- 60 190 316
- US-A- 5 942 169

## Beschreibung

Die Erfindung betrifft ein Verfahren zur Herstellung eines rohrförmigen Hohlkörpers mit mindestens drei Rohröffnungen teilweise oder vollständig bestehend aus Kunststoff wobei ein verlorenes Kernrohr hergestellt wird, das beidendig jeweils eine Anschlussöffnung und über seine Länge mindestens eine Andocköffnung aufweist, dass das Kernrohr in einen Formhohlraum einer Form eingebracht wird, wobei zwei nicht verlorene Kernstücke jeweils mit einem ihrer Enden dichtend an den Anschlussöffnungen angeordnet werden sowie ein nicht verlorenes Kernteil mit einem Ende dichtend an der Andocköffnung angeordnet wird, dass dann in den Formhohlraum zum Umspritzen von Kernrohr, den Kernstücken und dem Kernteil Kunststoff eingebracht wird und dass nach dem Aushärten des Kunststoffs die Kernstücke und das Kernteil aus dem erstellten Hohlkörper herausgezogen werden.

Es ist bekannt, rohrförmige Hohlkörper, die als Hosenrohre ausgebildet sind und jeweils in etwa eine Y-Form aufweisen, aus zwei vorgefertigten Halbschalen zusammenzusetzen. Ferner ist es bekannt, zur Herstellung eines rohrförmigen Hohlkörpers alle Hohlräume durch vorgefertigte Rohrteile auszubilden, dann die Rohrteile zusammenzusetzen und allesamt mit Kunststoff zu umspritzen. Die JP 60 129 225 beschreibt ein solches Verfahren Indem ein T-Fitting umspritzt wird, wobei der Kunststoff zum Umspritzen durch die Kerne zugeführt wird. Die EP 0 384 924 A, JP 01 063 117 und die JP 60 129 225 offenbaren einen rohrförmigen Hohlkörper der durch ein Verfahren hergestellt ist bei dem der Kanalverlauf durch einen elastischen Kern gebildet und nach dem Spritzen durch herausziehen entfernt wird.

Der Erfindung liegt die Aufgabe zugrunde, ein Verfahren zur Herstellung eines rohrförmigen Hohlkörpers anzugeben, das wenig Aufwand und Vorbereitung erfordert und dennoch die Herstellung präziser und hochfester Hohlkörper ermöglicht.

Hierzu ist erfindungsgemäß vorgesehen, dass das Kernrohr quer, insbesondere rechtwinklig, zu den Kernstücken und dem Kernteil verläuft. Demzufolge ist es für die Herstellung des rohrförmigen Hohlkörpers nur erforderlich, vorab das verlorene Kernrohr herzustellen. An deren Enden werden anschließend die Kernstücke angeordnet, die im fertigen, mit Kunststoff umspritzten Bauteil anschließend Hohlräume bilden, die mit dem Innenraum des Kernrohrs kommunizieren. Entsprechendes gilt für das nichtverlorene Kernteil, das dichtend an der Andocköffnung angeordnet wird, sodass auch hier nach Herausziehen des Kernteils eine kommunizierende Verbindung zum Innenraum des Kernrohres erstellt wird. Die Anordnung der Teile erfolgt vorzugsweise derart, dass die Längserstreckungen von den beiden Kernstücken und dem Kernteil quer, insbesondere senkrecht, zur Längserstreckung des Kernrohres verlaufen, sodass der Hohlkörper die Form eines Hosenrohrs erhält. Sind mehr als eine Andocköffnung vorgesehen, so wird jeder Andocköffnung ein Kernteil zugeordnet und auf diese Art und Weise ein Hohlkörper gebildet, der eine von einer Y-Form abweichende Formgebung aufweist.

Nach einer Weiterbildung der Erfindung ist vorgesehen, dass nach dem Einbringen von dem Kernrohr, den Kernstücken und dem Kernteil die Form geschlossen wird. Unter "Einbringen" ist auch zu verstehen, dass die Kernstücke und das Kernteil nicht in die Form eingelegt, sondern - weil sie verlagerbare Elemente der Form sind - dass sie in den Formhohlraum hineingeschoben werden. Alle erwähnten Elemente werden demzufolge in die offene Form eingebracht und anschließend wird die Form geschlossen. Danach kann das Umspritzen mit Kunststoff erfolgen. Ist der Kunststoff ausgehärtet, so können die Kernstücke und das Kernteil aus dem Formling herausgezogen werden. Anschließend wird die Form geöffnet.

Nach einer Weiterbildung der Erfindung ist vorgesehen, dass eine Form verwendet wird, die die Kernstücke und das Kernteil als verlagerbare Elemente aufweisen. Alternativ wäre es möglich, dass die Kernstücke und das Kernteil nicht Bestandteil der Form sind, sondern in diese eingelegt werden.

Die Erfindung betrifft ferner einen rohrförmigen Hohlkörper, der insbesondere als Hosenrohr ausgebildet ist, hergestellt nach dem vorstehend erwähnten Verfahren, mit einem Verteilerrohr, von dessen Enden jeweils ein Abzweigrohr ausgeht, und mit einem Anschlussrohr, das vom Verteilerrohr - über dessen Länge gesehen - ausgeht, wobei das Verteilerrohr ein zumindest teilweise in nach dem Zuführen ausgehärteten Kunststoff eingebettetes Kernrohr ist und vom zugeführten Kunststoff die Abzweigrohre und/oder das Anschlussrohr ausgebildet sind/ist. Erfindungsgemäß ist vongesehen, dass das Verteilerrohr quer, insbesondere rechtwinklig, zu den Abzweigrohren und zu dem Anschlussrohr verläuft. Bei dem erfindungsgemäßen Hohlkörper ist demzufolge das zumindest im ausgehärteten Kunststoff eingebettete Verteilerrohr beziehungsweise Kernrohr ein vorgefertigtes Rohr. Die Abzweigrohre und/oder das Anschlussrohr werden anschließend in Kunststoffspritztechnik erzeugt und dabei kommunizierend an das vorgefertigte Verteilerrohr angeschlossen.

Ferner ist es vorteilhaft, wenn die Abzweigrohre und/oder wenn das Anschlussrohr durch aus den Kunststoff herausgezogene Kernstücke beziehungsweise durch aus dem Kunststoff herausgezogenem Kernteil gebildet sind/ist. Bei den Kernstücken beziehungsweise dem Kernteil kann es sich um Vollmaterialteile handeln, insbesondere um Stahlteile. Sie müssen nicht rohrförmig gestaltet sein, weil sie mit Kunststoff umspritzt werden, wodurch Rohrteile des rohrförmigen Hohlkörpers erstellt werden.

Schließlich ist es vorteilhaft, wenn der Hohlkörper ein Kunststoffspritzgussteil mit dem Verteilerrohr als Einlegeteil ausgebildet ist.

Die Zeichnungen veranschaulichen die Erfindung anhand eines Ausführungsbeispiels, und zwar zeigt:
- Figur 1: eine perspektivische Ansicht auf einen hergestellten, rohrförmigen Hohlkörper mit aus ihm herausgezogenen Kernstücken und herausgezogenem Kernteil,
- Figur 2: eine perspektivische Ansicht eines verlorenen Kernrohrs, das im Hohlkörper der Figur 1 eingebettet wird,
- Figur 3: eine Teilansicht auf das Kernrohr sowie die am Kernrohr dichtend angeordneten Kernstücke und das dichtend angeordnete Kernteil,
- Figur 4: eine Draufsicht auf die Anordnung der Figur 3,
- Figur 5: der fertig hergestellte rohrförmige Hohlkörper im Schnitt mit noch nicht herausgezogenen Kernstücken und noch nicht herausgezogenem Kernteil.

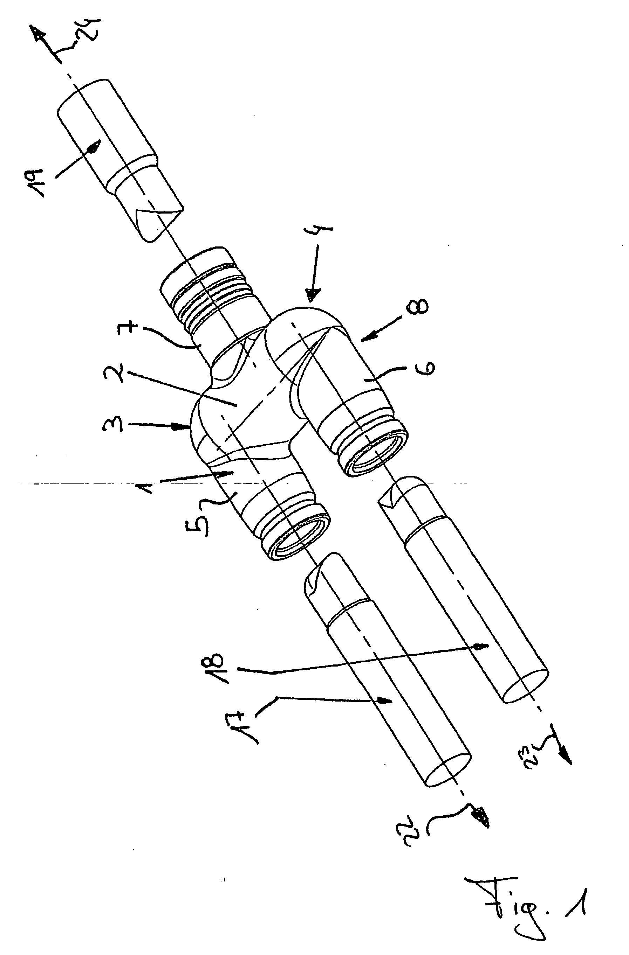

Die Figur 1 zeigt einen rohrförmigen Hohlkörper 1, der ein Verteilerrohr 2 aufweist, von dessen Enden 3, 4 jeweils ein Abzweigrohr 5, 6 ausgeht, und der ein Anschlussrohr 7 aufweist, das vom Verteilerrohr 2 - über dessen Länge gesehen - ausgeht. Insgesamt ist der rohrförmige Hohlkörper 1 als so genanntes Hosenrohr 8 ausgebildet, das in etwa eine Y-Form aufweist, wobei die Abzweigrohre 5 und 6 rechtwinklig zum Verteilerrohr 2 verlaufen. Ferner verläuft das Anschlussrohr 7 ebenfalls rechtwinklig zum Verteilerrohr 2, wobei die beiden freien Enden der Abzweigrohre 5 und 6 zum freien Ende des Anschlussrohrs 7 in entgegengesetzte Richtung weisen. Mittels eines derartigen Hosenrohrs 8 können Flüssigkeitsverteilungsaufgaben, zum Beispiel bei der Trinkwasserversorgung, gelöst werden. Wird beispielsweise über das Anschlussrohr 7 Trinkwasser eingeleitet, so gelangt dies in das Verteilerrohr 2 und teilt sich auf Abzweigrohr 5 und Abzweigrohr 6 auf.

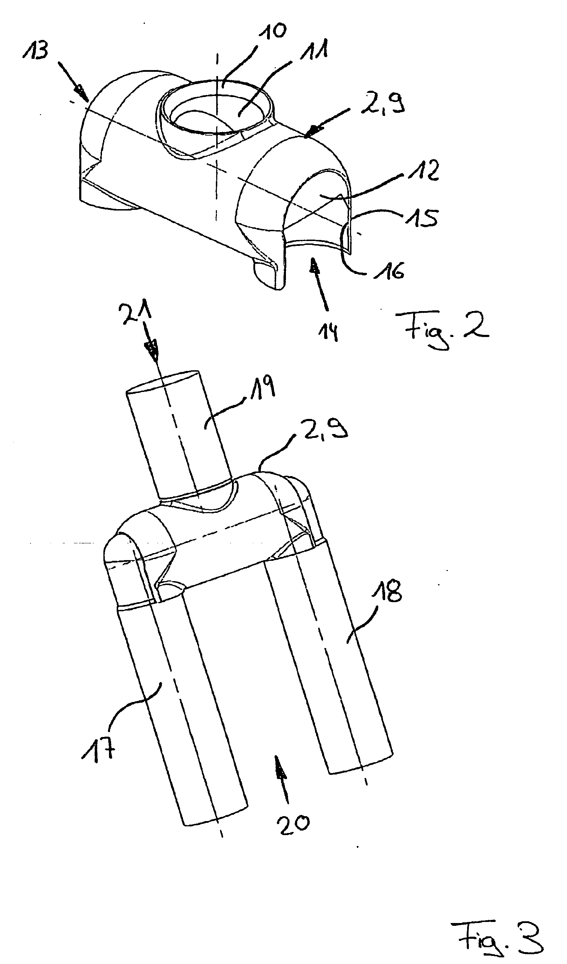

Um einen derartigen rohrförmigen Hohlkörper 1 herzustellen wird - gemäß der Figuren 2 bis 5 - wie folgt vorgegangen. Zunächst wird in einem ersten Produktionsschritt das Verteilerrohr 2 gemäß Figur 2 hergestellt. Bei dem Verteilerrohr 2 handelt es sich um ein verlorenes Kernrohr 9, das als Kunststoffrohr in einer Form hergestellt wird. Als Kunststoff kommt insbesondere PPSU (Polyphenylsulfon) zum Einsatz. Gemäß Figur 2 weist das Kernrohr 9 einen Kragen 10 auf, der eine Andocköffnung 11 umgibt, die in einen Rohrhohlraum 12 des Kernrohrs 9 mündet. Ferner weist das Kernrohr 9 beidendig jeweils eine Anschlussöffnung 13, 14 auf, die jeweils einen im Wesentlichen U-förmigen Rand 15 und einen sich daran anschließenden, ebenfalls U-förmigen Rand 16 besitzt, wobei die beiden U-Ränder winklig, vorzugsweise um 90°, zueinander stehen.

Beim Herstellen des rohrförmigen Hohlkörpers 1 gemäß Figur 1 wird das Kernrohr 9 gemäß Figur 2 in eine nicht dargestellte Form eingelegt. Diese Form weist zwei bewegliche, nicht verlorene Kernstücke 17, 18 sowie ein bewegliches, nicht verlorenes Kernteil 19 auf (siehe hierzu Figuren 1 und 3). Gemäß Figur 3 werden dem in die Form eingelegten Kernrohr 5 die beiden Kernstücke 17 und 18 entsprechend Pfeil 20 derart zugeführt, dass diese mit ihren vorderen Endbereichen dichtend die Anschlussöffnungen 13 und 14 verschließen. Das Kemtell 19 der Form wird entsprechend Pfeil 21 dem Kernrohr 9 zugeführt, derart, dass es mit seinem vorderen Endbereich dichtend die Andocköffnung 11 verschließt.

Nunmehr wird die Form geschlossen, die die Anordnung gemäß Figur 3 enthält. Jetzt wird in den Formhohlraum nicht ausgehärteter Kunststoff eingebracht, derart, dass das Kernrohr 9, die Kernstücke 17 und 18 und das Kernteil 19 mit Kunststoff, insbesondere mit PPSU, umspritzt werden. Damit hat der Hohlkörper 1 seine endgültige Form erhalten. Der Formhohlraum der Form ist derart gestaltet, dass - gemäß Figur 1 - entsprechende Durchmesser, Nuten, Hinterschneidungen und so weiter am Hohlkörper 1 ausgebildet werden, so wie dies individuell gewünscht ist. Nachdem der eingespritzte Kunststoff ausgehärtet ist, werden die beiden Kernstücke 17 und 18 gemäß der Pfeile 22 und 23 in Figur 1 aus dem nicht dargestellten Formhohlraum der Form herausgezogen. Entsprechendes gilt für das Kernteil 19, das gemäß Pfeil 24 herausgezogen wird. Aus alledem ergibt sich, dass das vorgefertigte Verteilerrohr 2 ein eingebettetes Kernrohr 9 darstellt und dass die übrigen Bereiche des rohrförmigen Hohlkörpers 2 durch Umspritzen der Kernstücke 17 und 18 beziehungsweise des Kernteils 19 mit Kunststoff, insbesondere mit PPSU, hergestellt werden.

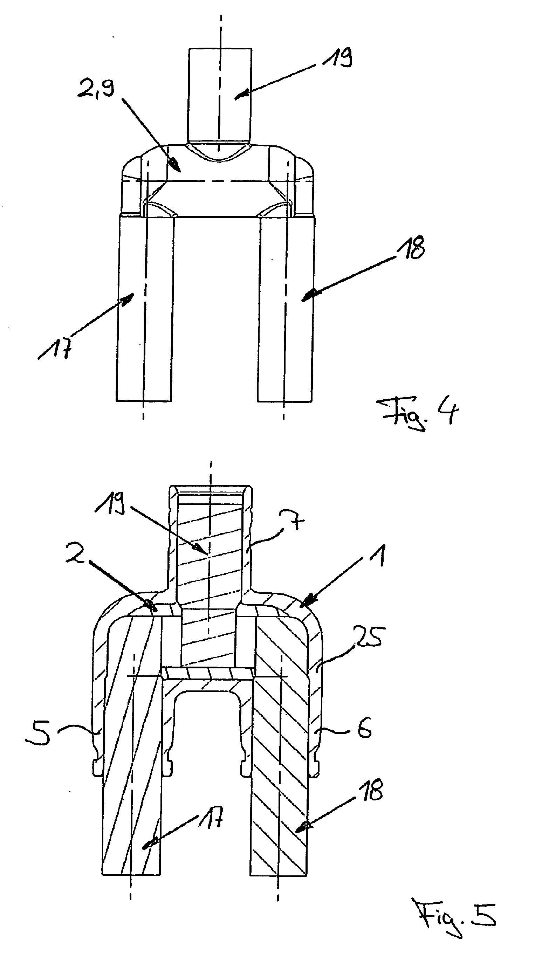

Der Figur 4 ist nochmals deutlich zu entnehmen, wie die Anordnung innerhalb der Form bei noch nicht erfolgter Kunststoffumspritzung aussieht. Erkennbar ist das Verteilerrohr 2 mit jeweils an ihm angeordneten Kernstücken 17 und 18 sowie an ihm angeordneten Kernteil 19. Die Figur 5 zeigt die Anordnung der Figur 4 im Querschnitt, wobei jedoch bereits ein Umspritzen mit Kunststoff 25 erfolgt ist, sodass bereits das Abzweigrohr 5 und das Abzweigrohr 6 als auch das Anschlussrohr 7 ausgebildet sind. Die Kernstücke 17 und 18 und das Kernteil 19 befinden sich noch im eingefahrenen Zustand, das heißt, sie sind noch nicht entfernt worden.

## Patentansprüche

1. Verfahren zur Herstellung eines rohrförmigen Hohlkörpers (1) mit mindestens drei Rohröffnungen teilweise oder vollständig bestehend aus Kunststoff, wobei ein verlorenes Kernrohr (9) hergestellt wird, das beidendig jeweils eine Anschlussöffnung (13,14) und über seine Länge mindestens eine Andocköffnung (11) aufweist, dass das Kernrohr (9) in einen Formhohlraum einer Form eingebracht wird, wobei zwei nicht verlorene Kernstücke (17,18) jeweils mit einem ihrer Enden (3,4) dichtend an den Anschlussöffnungen (13,14) angeordnet werden sowie ein nicht verlorenes Kernteil (19) mit einem Ende dichtend an der Andocköffnung (11) angeordnet wird, dass dann in den Formhohlraum zum Umspritzen von Kernrohr (9), den Kernstücken (17,18) und dem Kernteil (19) Kunststoff (25) eingebracht wird und dass nach dem Aushärten des Kunststoffs (25) die Kernstücke (17,18) und das Kernteil (19) aus dem erstellten Hohlkörper (1) herausgezogen werden, **dadurch gekennzeichnet, dass** das Kernrohr (9) quer, insbesondere rechtwinklig, zu den Kernstücken (17, 18) und dem Kernteil (19) verläuft.

2. Verfahren nach Anspruch 1, **dadurch gekennzeichnet, dass** nach dem Einbringen vom Kernrohr (9), den Kernstücken (17,18) und dem Kernteil (19) die Form geschlossen wird.

3. Verfahren nach einem der vorhergehenden Ansprüche, **dadurch gekennzeichnet, dass** nach dem Herausziehen der Kernstücke (17, 18) und des Kernteils (19) die Form geöffnet wird.

4. Verfahren nach einem der vorhergehenden Ansprüche, **dadurch gekennzeichnet, dass** eine Form verwendet wird, die die Kernstücke (17,18) und das Kernteil (19) als verlagerbare Elemente aufweist.

5. Rohrförmiger Hohlkörper, insbesondere Hosenrohr, hergestellt mit dem Verfahren gemäß einem oder mehreren der vorhergehenden Ansprüche, mit einem Verteilerrohr, von dessen Enden jeweils ein Abzweigrohr ausgeht, und mit einem Anschlussrohr, das vom Verteilerrohr - über dessen Länge gesehen - ausgeht, **und wobei** das Verteilerrohr (2) ein zumindest teilweise in nach dem Zuführen ausgehärteten Kunststoff (25) eingebettetes Kernrohr (9) ist, wobei vom zugeführten Kunststoff (25) die Abzweigrohre (5,6) und/oder das Anschlussrohr (7) gebildet sind/ist, **dadurch gekennzeichnet, dass** das Verteilerrohr (2) quer, insbesondere rechtwinklig, zu den Abzweigrohren (5,6) und dem Anschlussrohr (7) verläuft.

6. Hohlkörper nach einem der vorhergehenden Ansprüche, **dadurch gekennzeichnet, dass** die Abzweigrohre (5,6) und/oder das Anschlussrohr (7) durch aus dem Kunststoff (25) herausgezogene Kernstücke (17,18) beziehungsweise durch aus dem Kunststoff (25) herausgezogenem Kernteil (19) gebildet sind/ist.

7. Hohlkörper nach einem der vorhergehenden Ansprüche, **dadurch gekennzeichnet, dass** er ein Kunststoffspritzgussteil mit dem Verteilerrohr (2) als Einlegeteil ist.

## Claims

1. Method for producing a tubular hollow body (1) having at least three pipe openings consisting in part or completely of plastics material, wherein there is produced a lost core pipe (9) which has a connection opening (13, 14) at each of the two ends and at least one docking opening (11) over its length, in that the core pipe (9) is introduced into a mould cavity of a mould, wherein two non-lost core pieces (17, 18) are arranged in each case in a sealing manner at the connection openings (13, 14) by way of one of their ends (3, 4) and one non-lost core part (19) is arranged in a sealing manner at the docking opening (11) by way of one end, in that plastics material (25) is then introduced into the mould cavity for injecting around the core pipe (9), the core pieces (17, 18) and the core part (19) and in that once the plastics material (25) has cured, the core pieces (17, 18) and the core part (19) are withdrawn from the created hollow body (1), **characterized in that** the core pipe (9) extends transversely, in particular at right angles, with respect to the core pieces (17, 18) and the core part (19).

2. Method according to Claim 1, **characterized in that** once the core pipe (9), the core pieces (17, 18) and the core part (19) have been inserted, the mould is closed.

3. Method according to one of the preceding claims, **characterized in that** once the core pieces (17, 18) and the core part (19) have been withdrawn, the mould is opened.

4. Method according to one of the preceding claims, **characterized in that** a mould which has the core pieces (17, 18) and the core part (19) as displaceable elements is used.

5. Tubular hollow body, in particular a bifurcated pipe, produced using the method according to one or more of the preceding claims, having a distributor pipe, from each of the ends of which a branch pipe proceeds, and having a connection pipe which proceeds from the distributor pipe - when viewed over its length, and wherein the distributor pipe (2) is a core pipe (9) which is embedded at least partially in plastics material (25) cured after being supplied, wherein the branch pipes (5, 6) and/or the connection pipe (7) is/are formed from the supplied plastics material (25), **characterized in that** the distributor pipe (2) extends transversely, in particular at right angles, with respect to the branch pipes (5, 6) and the connection pipe (7).

6. Hollow body according to one of the preceding claims, **characterized in that** the branch pipes (5, 6) and/or the connection pipe (7) is/are formed by core pieces (17, 18) withdrawn from the plastics material (25) or by core part (19) withdrawn from the plastics material (25).

7. Hollow body according to one of the preceding claims, **characterized in that** said hollow body is a plastics material injection-moulded part with the distributor pipe (2) as an insert.

## Revendications

1. Procédé de fabrication d'un corps creux tubulaire (1) comprenant au moins trois ouvertures tubulaires constituées en partie ou complètement de plastique, un tube de coeur perdu (9) étant fabriqué, lequel présente aux deux extrémités à chaque fois une ouverture de raccordement (13, 14) et au moins une ouverture d'emboîtement (11) sur sa longueur, le tube de coeur (9) étant introduit dans une cavité de moule d'un moule, deux pièces de coeur non perdues (17, 18) étant à chaque fois disposées avec l'une de leurs extrémités (3, 4) de manière hermétique contre les ouvertures de raccordement (13, 14) et une partie de coeur non perdue (19) étant disposée avec une extrémité de manière hermétique contre l'ouverture d'emboîtement (11), du plastique (25) étant ensuite introduit dans la cavité de moule pour le surmoulage du tube de coeur (9), des pièces de coeur (17, 18) et de la partie de coeur (19), et après le durcissement du plastique (25), les pièces de coeur (17, 18) et la partie de coeur (19) étant retirées du coeur creux (1) créé, **caractérisé en ce que** le tube de coeur (9) s'étend transversalement, notamment à angle droit, par rapport aux pièces de coeur (17, 18) et à la partie de coeur (19).

2. Procédé selon la revendication 1, **caractérisé en ce qu'**après l'introduction du tube de coeur (9), des pièces de coeur (17, 18) et de la partie de coeur (19), le moule est fermé.

3. Procédé selon l'une quelconque des revendications précédentes, **caractérisé en ce qu'**après le retrait des pièces de coeur (17, 18) et de la partie de coeur (19), le moule est ouvert.

4. Procédé selon l'une quelconque des revendications précédentes, **caractérisé en ce que** l'on utilise un moule qui présente en tant qu'éléments déplaçables les pièces de coeur (17, 18) et la partie de coeur (19).

5. Corps creux tubulaire, en particulier tube flexible, fabriqué à l'aide du procédé selon l'une quelconque ou plusieurs des revendications précédentes, comprenant un tube distributeur, des extrémités duquel part à chaque fois un tube de branchement, et comprenant un tube de raccordement qui part du tube distributeur - vu sur sa longueur -, et dans lequel le tube distributeur (2) est un tube de coeur (9) au moins partiellement noyé dans du plastique (25) durci après l'introduction, les tubes de branchement (5, 6) et/ou le tube de raccordement (7) étant formé(s) par le plastique (25) alimenté, **caractérisé en ce que** le tube distributeur (2) s'étend transversalement, notamment à angle droit, par rapport aux tubes de branchement (5, 6) et au tube de raccordement (7).

6. Corps creux selon l'une quelconque des revendications précédentes, **caractérisé en ce que** les tubes de branchement (5, 6) et/ou le tube de raccordement (7) est/sont formé(s) par des pièces de coeur (17,18) retirées du plastique (25) respectivement par une partie de coeur (19) retirée du plastique (25).

7. Corps creux selon l'une quelconque des revendications précédentes, **caractérisé en ce qu'**il s'agit d'une pièce moulée par injection de plastique avec le tube distributeur (2) en tant que pièce d'insertion.
